Europäisches Patentamt

European Patent Office

Office européen des brevets

(11) Veröffentlichungsnummer: **0 374 806 B1**

(12) **EUROPÄISCHE PATENTSCHRIFT**

(45) Veröffentlichungstag der Patentschrift: **26.10.94**

(51) Int. Cl.5: **B01J 3/08**, B01J 19/08, B01J 19/12, //C01B7/01

(21) Anmeldenummer: **89123406.4**

(22) Anmeldetag: **18.12.89**

(54) Verfahren zur Erzeugung höchster Energieflüsse.

(30) Priorität: **19.12.88 DE 3842670**

(43) Veröffentlichungstag der Anmeldung:
**27.06.90 Patentblatt 90/26**

(45) Bekanntmachung des Hinweises auf die
Patenterteilung:
**26.10.94 Patentblatt 94/43**

(84) Benannte Vertragsstaaten:
**AT BE CH DE ES FR GB IT LI NL SE**

(56) Entgegenhaltungen:
DE-A- 2 418 292
FR-A- 2 290 945

CONFERENCE ON LASERS AND ELECTRO-
OPTICS, DIGEST OF TECHNICAL PAPERS,
Baltimore, Maryland, 21.-24. Mai 1985, Seite
78; Y. KALISKY et al.: "Escimer laser photolysis studies of photoinduced aggregation in
polymers containing spiropyran units"

CONFERENCE ON LASERS AND ELECTRO-
OPTICS, DIGEST OF TECHNICAL PAPERS,
Baltimore, Maryland, 21.-24. Mai 1985, Seite
78; H. HELVAJIAN et al.: "Laer-assisted gasphase reactions in mercury/mercury dibromide mixtures"

(73) Patentinhaber: **Buck Werke GmbH & Co**
**Geislinger Strasse 21**
**D-73337 Bad Überkingen (DE)**

(72) Erfinder: **Winterberg, F., Prof. Dr.**
**5395 Goldenrod Drive**
**Reno Nevada 895 11 (US)**
Erfinder: **Hoff, Günter, Dr.**
**Alpenblick 42**
**D-7758 Daisendorf (DE)**
Erfinder: **Hoff, Axel**
**Alpenblick 42**
**D-7758 Daisendorf (DE)**

(74) Vertreter: **Spott, Gottfried, Dr. et al**
**Patentanwälte Spott und Puschmann**
**Sendlinger-Tor-Platz 11**
**D-80336 München (DE)**

**Beschreibung**

Die Erfindung betrifft ein Verfahren zur Erzeugung hoher Energieflüsse, das auf der Kombination des in Sprengstoffen und ähnlichen chemischen Verbindungen vorhandenen hohen Energieinhaltes mit der durch elektromagnetische Prozesse erreichbaren hohen Abrufgeschwindigkeit der Reaktion (nahe der Lichtgeschwindigkeit) beruht. Mit diesem Verfahren können erstmals über chemische Reaktionen Energieflüsse erzeugt werden, die sonst nur bei Kernreaktionen verfügbar sind. Es eröffnet somit die Möglichkeit, Materiezustände zu erreichen, die bisher auf konventionellem Wege nicht erreichbar sind und ist beispielsweise für neue Materialien, das Pumpen von Röntgenlasern und das Prinzip der Laserfusion (Fokussierung von Photonen auf kleinste Volumina) von Bedeutung.

Bekannt ist der Energieabruf in Form einer Detonationswelle aus konventionellen Sprengstoffen. Alle Experimente zeigen jedoch, daß hierbei die Detonationsgeschwindigkeit von 10 km/s nicht überschritten werden kann. Dadurch wird trotz des hohen Energieinhaltes der Sprengstoffe der erzielbare Energiefluß stark begrenzt. Die Forschung zur Leistungssteigerung von Sprengstoffen durch Erhöhung der Detonationsgeschwindigkeit wurde schon vor Jahren eingestellt. Alle weiteren Arbeiten konzentrierten sich vielmehr darauf, die Sprengstoffe sicherer zu machen, nämlich zu phlegmatisieren. Nach Sänger (Z. Naturforsch. 8a (1953), 204 bis 206) pflanzt sich die Detonationswelle über die von der etwa 100000 K heißen Reaktionsfront ausgesandte Strahlung fort. Durch Absorption dieser Strahlung im Bereich vor der Reaktionsfront wird der dort befindliche Sprengstoff verdampft und die Reaktion eingeleitet. Da die thermische Lumineszenzstrahlung der Reaktionsfront bei etwa 25 nm im fernen UV-Bereich liegt, in dem alle Materie undurchsichtig ist, ist die freie Weglänge der Photonen sehr klein. Daher erfolgt das Fortschreiten der Reaktionsfront mit der im Vergleich zur Lichtgeschwindigkeit geringen Geschwindigkeit von etwa 10 km/s.

Bekannt ist weiterhin, daß unter Ausnutzung elektromagnetischer Prozesse, nämlich bei der Energiefreisetzung durch Photonen, in durchsichtigen Materialien der Abruf der gespeicherten Energie mit Lichtgeschwindigkeit möglich wird. Dieses Verfahren wird standardmäßig beim Laser angewandt. Hier ist der erzielbare Energiefluß durch die relativ geringe Energiedichte in den laserfähigen Zuständen jedoch begrenzt. Störend wirkt sich auch aus, daß für den Betrieb von Höchstleistungslasern hohe elektrische Leistungen und große aktive Volumina benötigt werden, die den mobilen Einsatz solcher Systeme behindern. Auch der versuch, die in nuklearen Sprengsätzen gespeicherte Energie zum Pumpen eines Röntgenlasers einzusetzen, führt hier zu keiner wesentlichen Verbesserung, da der nötige Einsatz von Kernreaktionen die zivile Anwendung solcher Systeme ausschließt.

Der Erfindung liegt die Aufgabe zugrunde, die hohe Energiedichte der Sprengstoffe und die hohe Energieabrufgeschwindigkeit des Lasers auf eine Art zu verbinden, die zu einem praktisch einsetzbaren System führt. Diese Aufgabe wird erfindungsgemäß durch die Merkmale

Es werden Stoffe und Bedingungen für die Reaktion gewählt, bei denen die Initiierung der Reaktion, das Fortschreiten der Reaktionsfront und der Energieaustrag aus der reaktiven Zone durch prinzipiell mit Lichtgeschwindigkeit laufende Felder oder Wellen, nämlich durch Photonen, vermittelt werden, die nicht im thermischen Gleichgewicht mit der reagierenden Substanz stehen und die dadurch auch unter den Bedingungen der Reaktion die hohe Geschwindigkeit der Energiefreisetzung gewährleisten. Durch den Verzicht auf die Forderung nach der Laserfähigkeit der energiereichen Zustände steht ein wesentlich breiteres Spektrum an verwendbaren Stoffen zur Verfügung, die zudem wesentlich leichter handhabbar sind als laserfähige Stoffe.

Vorteilhaft können hierzu energiereiche Stoffe verwendet werden, die unter Aussendung von Photonen eines definierten Wellenlängenbereiches reagieren und dabei einen möglichst hohen Teil der in ihnen gespeicherten Energie in Form von Photonen abgeben und in denen die freie Weglänge für die bei der Reaktion freigesetzten Photonen so groß ist, daß einerseits die freiwerdende Energie wirkungsvoll in Form von Photonen abtransportiert werden kann, andererseits aber (für die unten beschriebene Ausgestaltung der Photonenkettenreaktion) noch genügend Photonen absorbiert werden, um das Weitertragen der Reaktion zu gewährleisten.

Das erfindungsgemäße Verfahren kann in mehreren Ausgestaltungen Anwendung finden, wie in den Unteransprüchen 2 bis 16 definiert. Die naheliegendste Ausgestaltung ist die voll photongesteuerte Reaktion, bei der eine Reaktion, die einen möglichst großen Teil der freiwerdenden Energie in Form von Photonen abgibt, selbst durch Absorption eines Photons ausgelöst wird. In der Tat laufen Detonationen in Sprengstoffen nach solchen Mechanismen ab, nur daß die beteiligten Photonen im UV-Bereich liegen und im thermischen Gleichgewicht mit dem detonierenden Sprengstoff stehen. Durch die sich so ergebenden kurzen freien Weglängen für die erzeugte Strahlung ergibt sich die im Vergleich zur Lichtgeschwindigkeit extrem langsame Geschwindigkeit der Detonationsfront von etwa 10 km/s. Computersimulationen haben jedoch gezeigt, daß eine photoneninduzierte Kettenreaktion möglich ist, bei der die Geschwindigkeit des Energieabrufes bis nahe an die Lichtgeschwindigkeit gesteigert werden kann, wenn mehrere Voraussetzungen erfüllt sind. Die wesentlichsten Voraussetzungen hierfür sind:

- Bei der Reaktion muß eine Photonenvervielfachung auftreten, sodaß sich die Reaktion summarisch schreiben lassen muß als

    Edukte + h$\nu$ → Produkte + n•h$\nu$ , worin n > 1 ist.

- Die bei der Reaktion auftretenden Photonen dürfen nicht im thermischen Gleichgewicht mit den reagierenden Substanzen stehen und müssen daher relativ große mittlere freie Weglängen besitzen. Dieses Kriterium schließt beispielsweise die Photonen im UV-Bereich aus, die bei der Detonation konventioneller Sprengstoffe involviert sind.
- Die Reaktionszeit, nämlich der mittlere Zeitraum zwischen der Absorption eines Photons durch ein reaktionsfähiges Molekül und der Aussendung der freiwerdenden Photonen muß relativ kurz sein (ideal etwa $10^{-12}$ s), um einen hoben Energiefluß zu erhalten. Aus der mittleren freien Weglänge 1 und der Reaktionszeit $t_R$ läßt sich sofort die Energieabrufgeschwindigkeit gemäß

    $v_E = 1•c / (1 + t_R•c)$

    berechnen. (Die Werte für 1 und $t_R$ müssen also nicht jeder für sich optimiert werden, sie müssen lediglich in einem solchen Verhältnis zueinander stehen, daß eine möglichst hohe Energieabrufgeschwindigkeit ergibt.)
- Eine weitere Erhöhung des Energieflusses erreicht man bei Entstehen einer Photonenstoßwelle. Bedingung für das Entstehen einer solchen Stoßwelle ist einerseits die Verspiegelung der Gefäßwände, um den inkohärenten Photonen eine Vorzugsrichtung aufzuprägen, andererseits eine höhere Durchsichtigkeit der Reaktionsprodukte als der Edukte für die Photonen (nämlich eine um etwa zwei Größenordnungen größere mittlere freie Weglänge).

Unter diesen Umständen kann in geeigneten Stoffen eine Photonenkettenreaktion induziert werden, nämlich ein Energieabruf in Form einer Vervielfachung der in einen Stoff eintretenden Photonen bei gleichzeitiger chemischer Reaktion des Stoffes. Im Normalfall wird dieses Phänomen nicht beobachtet, weil die erzeugten Photonen sofort wieder absorbiert werden und das Gebiet vor der Reaktionsfront aufheizen. Es sind somit energiereiche Stoffe geeignet, die eine 'kalte Detonation' ermöglichen, bei der die chemische Energie hauptsächlich in elektromagnetische Energie und nicht oder nur zu einem unwesentlichen Anteil in Wärmeenergie umgewandelt wird.

Dafür ist es erforderlich, daß die bei der Reaktion freiwerdenden Photonen in der bereits reagierten Substanz eine möglichst große freie Weglänge haben. Für den Wirkungsgrad der Kettenreaktion ist es andererseits wünschenswert, daß die freie Weglänge der Photonen in der ursprünglichen Substanz klein ist, um eine wirkungsvolle Zündung zu erreichen. Es sind somit energiereiche Stoffe geeignet, die die drei folgenden Bedingungen möglichst gut enfüllen:

- durch Photonen initiierbare Reaktion, die unter Aussendung von Photonen verläuft und bei der sich insgesamt eine Photonenvervielfachung ergibt,
- niedrige freie Weglänge der Photonen in den Ausgangsstoffen,
- hohe freie Weglänge der Photonen in den Reaktionsprodukten.

Die Bedingung der Photonenvervielfachung bei der Reaktion grenzt die Zahl der energiereichen Substanzen, die für das beschriebene Verfahren geeignet sind, stark ein. In den Unteransprüchen 17 bis 27 sind bevorzugte Substanzklassen und Reaktionstypen angegeben.

Die Photonenvervielfachung bei der Reaktion läßt sich beispielsweise auf sehr einfache Weise erreichen, wenn man nach Anspruchs 18 eine Reaktion vom Typ der Chlorknallgasreaktion wählt. Bei diesem Reaktionstyp zerfällt ein Molekül (Chlor, verallgemeinert AQ) nach Photonenabsorption in zwei Radikale, die dann jedes für sich mit einem weiteren Partner (Wasserstoff, verallgemeinert XZ) reagieren. Wenn dieser Reaktionspartner so gewählt wird, daß bei jeder Folgereaktion wieder ein Photon freigesetzt wird, ergibt sich, da pro absorbiertem Photon zwei reaktive Radikale entstehen, ein Photonenvervielfachungsfaktor von zwei. Durch diese Aufspaltung in zwei Teilreaktionen, bei der die Photonenvervielfachung von der zweiten Teilreaktion und dem zweiten Reaktionspartner unabhängig ist, wird die Suche nach geeigneten Substanzen wesentlich vereinfacht.

Die eigentliche Chlorknallgasreaktion kann hierfür nur als Modell dienen, da bei der Reaktion der Chlorradikale mit Wasserstoff keine, geeigneten Photonen frei werden. Es sind somit Substanzen einzusetzen, die in dieser Reaktion an die Stelle des Wasserstoffs treten können und die bei Reaktion mit einem Chlorradikal mindestens ein Photon freisetzen. Eventuell kann auch das Chlor durch eine andere Substanz ersetzt werden, die nach Absorption eines Photons in zwei Radikale zerfällt.

Das bei der Kettenreaktion möglicherweise auftretende Problem, daß die Wellenlänge der bei der Reaktion freiwerdenden Photonen nicht mit der Wellenlänge übereinstimmt, die erforderlich ist, um die Reaktion einzuleiten, läßt sich in Analogie zur Uranspaltung durch Einsatz von Moderatoren lösen. Als solche kommen hier Stoffe in Frage, die die freigesetzten Photonen absorbieren und beispielsweise durch Fluoreszenz mit kleiner Zeitkonstante in Photonen der für die Initiierung der Reaktion geeigneten Wellenlänge umsetzen.

Bei Verwendung von Moderatoren, die bei der genannten Wellenlängentransformation selbst zerfallen, lassen sich außerdem die Bedingungen an die freien Weglängen für Photonen abwandeln. In diesem Fall genügt die Bedingung, daß die Substanz selbst für die initiierenden Photonen möglichst undurchlässig, für die freiwerdenden Photonen aber möglichst durchlässig ist. Diese Bedingung ist gegebenenfallsleichter zu erfüllen als die oben genannten Bedingungen und stellt insofern eine Alternative dar,

Ein weiteres wesentliches Problem der Photonenkettenreaktionen ist, daß man die Spontanzündung der Anordnung (beispielsweise durch die permanent vorhandenen Photonen aus der kosmischen Höhenstrahlung) verhindern muß, um das System sicher handhabbar zu machen. Dieses Problem wird erfindungsgemäß dadurch gelöst, daß der Substanz entweder sättigbare Absorber beigemischt werden, nämlich Substanzen, die eine bestimmte Menge Photonen absorbieren können, aber nach Überschreiten dieser Schwelle durchsichtig werden und die weitere Reaktion nicht mehr behindern, oder daß die reaktive Substanz selbst eine inhärente Sicherheit gegen Spontanzündungen erhält. Wie Computersimulationen zeigen, gibt es Werte für die charakteristischen Reaktionsparameter, bei denen die durch ein einzelnes Photon ausgelöste Reaktion nach kurzer Zeit und ohne nennenswerte Auswirkung zum Stillstand kommt, während der Einfall einer überkritischen Zahl von Photonen die volle Kettenreaktion auslöst. Dieser Mechanismus kann bei geeigneter Wahl der Parameter einen einfachen Weg aufzeigen, um die verwendeten energiereichen Stoffe sicher handhabbar zu machen. Auch der quantenmechanische Effekt der 'self induced transparency' kann hier Verwendung finden.

Die Sicherheit der Stoffe kann verbessert werden, indem man eine Anordnung wählt, bei der die Reaktion zwischen den Edukten im Normalfall nicht durch einfallende Photonen initiiert werden kann, bei der aber durch Ausnutzung beispielsweise des piezoelektrischen Effektes die Konfiguration der Edukte bei Anlegen eines elektrischen Feldes so verändert wird, daß die Zündung der Reaktion durch Photonen möglich wird. Zur Zündung dieser Anordnung würde dann gleichzeitig ein elektrisches Feld angelegt und ein starker Lichtstrahl von geeigneter Wellenlange auf den Stoff gerichtet.

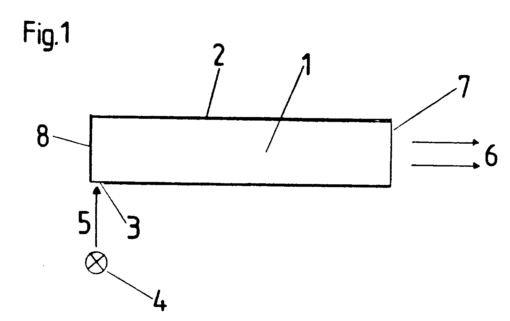

Ein Vorschlag für eine konkrete apparative Anordnung ergibt sich aus der nachfolgend beschrieben Figur 1. Sie zeigt in Draufsicht eine auch im Patentanspruch 16 angesprochene Anordnung:

In einem länglichen Reaktionsgefäß 1, dessen Rückwand 8 und Seitenwände 2 verspiegelt sind, befindet sich das reaktive Stoffgemisch. Durch eine nicht oder nur halbdurchlässig verspiegelte Stelle 3 an der Rückseite des Gefäßes kann zur Initiierung der Reaktion ein von einer geeigneten Lichtquelle 4 erzeugter und gegebenenfalls durch ein Linsenoder Spiegelsystem geeignet gerichteter und fokussierter Photonenstrahl 5 eintreten. Die Reaktionsfront wandert von der Rückwand 8 zur nicht verspiegelten Vorderwand 7. Die dabei ungerichtet freiwerdenden Photonen werden durch Reflexion an den Wänden 2 und 8 zur Vorderwand 7 geleitet. Aufgrund der unterschiedlichen freien Weglängen der Photonen in den Edukten und Produkten der Reaktion ist die mittlere Geschwindigkeit der zunächst rückwärts laufenden Photonen größer als die der von Anfang an vorwärts laufenden, so daß erstere nach der Reflexion an der Rückwand 8 letztere einholen. Dadurch steilt sich eine Photonenstoßwelle auf, die schließlich durch die Vorderwand 7 in der groben Richtung austritt, die durch den Pfeil 6 angedeutet ist. Da die emittierten Photonen (außer im Fall des Anspruches 8.) nicht kohärent sind, läuft die Stoßwelle nach Verlassen des Gefäßes 1 auseinander. Das mit Photonen zu beaufschlagende Target wird somit sinnvoll direkt vor der Vorderwand 7 angebracht. Für das Erzielen einer optimalen Wirkung auf das Target ist es wünschenswert, die Breite des Gefäßes ungefähr der Größe des Targets anzupassen. Die an der Reaktion beteiligte Stoffmenge kann dann durch Veränderung der Länge des Gefäßes variiert werden. Im allgemeinen ist sinnvoll, das Verhältnis von Länge zu Breite möglichst groß zu wählen, da so eine höhere Photonendichte am Ausgang erzeugt werden kann.

## Patentansprüche

1. Verfahren zur Erzeugung hoher Energieflüsse durch Energiefreisetzung aus einer voranschreitenden Reaktionsfront in energiereichen Stoffen, dadurch **gekennzeichnet**, daß Initiierung der Reaktion, Fortschreiten der Reaktionsfront und Energieaustrag aus der reaktiven Zone direkt oder indirekt durch elektromagnetische Wellen, nämlich durch Photonen, vermittelt werden, die nicht im thermischen Gleichgewicht mit dem reagierenden Stoff stehen und sich daher im optimalen Fall mit annähernd Lichtgeschwindigkeit ausbreiten können, daß die ablaufende Reaktion bzw. die Summe der ablaufenden Teilreaktionen zu einer Photonenvervielfachung führt, daß eine Geschwindigkeit $v_E$ der Reaktionsfront von über 10 km/s durch geeignete Wahl der Parameter mittlere freie Weglänge l der Photonen in der energiereichen Substanz, mittlerer Zeitraum $t_R$ zwischen der Absorption eines Photons und der Aussendung der freiwerdenden Photonen und der technischen Anordnung erreicht wird, was dadurch erreicht wird, daß l und $t_R$ so aufeinander abgestimmt werden, daß sich gemäß der Formel

$$v_E = l \cdot c / (l + t_R \cdot c)$$

(c = Lichtgeschwindigkeit)
ein möglichst großes $V_E$ ergibt, und daß der Energieaustrag aus der reaktiven Zone dadurch gewährleistet ist, daß die Reaktionsprodukte für die freigesetzten Photonen durchlässig sind.

2. Verfahren nach Anspruch 1, dadurch gekennzeichnet, daß die Energiefreisetzung in Form einer Kettenreaktion erfolgt, bei der die elementare Reaktion durch ein Photon, insbesondere im Wellenlängenbereich von etwa 200 bis etwa 800 nm, initiiert wird, aber mehr als ein Photon derselben Wellenlänge freisetzt.

3. Verfahren nach Anspruch 1 oder 2, dadurch gekennzeichnet, daß die Endprodukte der Reaktion für die bei der Reaktion auftretenden Photonen durchlässiger sind als die Ausgangsstoffe, so daß sich die aus dem gesamten Volumen hinter der Reaktionsfront austretenden Photonen zu einer Photonenstoßwelle aufstellen.

4. Verfahren nach den Ansprüchen 1 und 3, dadurch gekennzeichnet, daß die freigesetzten Photonen eine andere Wellenlänge haben als die induzierenden Photonen und daß die Wellenlänge dieser Photonen entweder direkt zur Initiierung von weiteren Elementar-Reaktionen ausreicht oder aber, insbesondere durch quanten-mechanische Prozesse in "Moderator-Molekülen", zu solchen Wellenlängen hin transformiert wird, die weitere Elementar-Reaktionen initiieren können.

5. Verfahren nach den Ansprüchen 1, 2 und 4, dadurch gekennzeichnet, daß die energiereichen Stoffe und die Reaktionsprodukte für die freigesetzten Photonen durchlässig und die energiereichen Stoffe für die induzierenden Photonen aber undurchlässiger sind, und daß sich die "Moderator-Moleküle" bei der Wellenlängentransformation zersetzen, so daß Energieabruf und Ausbreitung der Kettenreaktion optimal aufeinander abgestimmt werden können und sich die aus dem Volumen hinter der Reaktionsfront austretenden Photonen zu einer Photonenstoßwelle aufsteilen.

6. Verfahren nach Anspruch 5, dadurch gekennzeichnet, daß das Aufsteilen der Photonenstoßwelle dadurch unterstützt wird, daß, vorzugsweise durch zusätzlich eingebrachte Stoffe, die bei Durchgang der Reaktionsfront zerfallen und die einen höheren Brechungsindex haben als ihre Zerfallsprodukte, der Brechungsindex des Mediums vor der Reaktionsfront gegenüber dem hinter der Reaktionsfront heraufgesetzt wird.

7. Verfahren nach Anspruch 5 oder 6, dadurch gekennzeichnet, daß das Aufsteilen der Photonenstoßwelle dadurch unterstützt wird, daß in das reaktive Gemisch Stoffe eingebracht werden, die in der Lage sind, die bei der Reaktion freiwerdenden Photonen aufzunehmen, vorzugsweise durch Übergang in metastabile angeregte Zustände zwischenzuspeichern und nach Durchgang der Reaktionsfront bzw. einer Photonenstoßwelle, wieder abzugeben.

8. Verfahren nach einem der Ansprüche 1 bis 7, dadurch gekennzeichnet, daß die bei hohen Photonendichten auftretende Selbstfokussierung der Photonen aufgrund der Effekte der nicht-linearen Optik, Bose-Einstein-Kondensation, ausgenutzt wird, um den durch die Reaktion erzielbaren Energiefluß weiter zu erhöhen.

9. Verfahren nach einem der Ansprüche 1 bis 8, dadurch gekennzeichnet, daß die energiereichen Stoffe im Festkörper derart angeordnet werden, daß die Reaktion durch Umordnung der elektronischen Molekülorbitale ohne nennenswerte Ortsveränderung der Atomkerne erfolgt und deshalb durch Photonen induziert und unter Aussendung von Photonen in kurzer Zeit, vorzugsweise etwa $10^{-12}$ s, ablaufen kann.

10. Verfahren nach einem der Ansprüche 1 bis 9, dadurch gekennzeichnet, daß die energiefreisetzenden Reaktionen "eingefroren" werden, d.h., daß die energiereichen Substanzen durch starke Kühlung und/oder Ausrichtung der Spins, insbesondere in einem starken Magnetfeld, daran gehindert werden, vorzeitig zu reagieren.

**11.** Verfahren nach einem der Ansprüche 1 bis 10, dadurch gekennzeichnet, daß eine plötzliche Änderung von äußeren elektrischen und/oder magnetischen Feldern, insbesondere im Zusammenhang mit der Ausnutzung des piezoelektrischen/magnetostriktiven Effektes oder von Dipolmomenten, dazu dient, einen energetisch instabilen Zustand der Reaktionspartner herbeizuführen, der dann durch Photonenabsorption gezündet werden kann.

**12.** Verfahren nach einem der Ansprüche 1 bis 11, dadurch gekennzeichnet, daß die Gefahr der Spontanzündung der energiereichen Stoffe dadurch vermieden wird, daß durch geeignete Wahl der Reaktionsparameter, wie mittlere freie Weglängen, Reaktionszeit, Photonenmultiplikationsfaktor, ein Ausgangszustand eingestellt wird, bei dem einzelne Photonen von dem Stoff absorbiert werden und lediglich größere Photonenmengen die Kettenreaktion auslösen können.

**13.** Verfahren nach einem der Ansprüche 1 bis 12, dadurch gekennzeichnet, daß die Gefahr der Spontanzündung der energiereichen Stoffe dadurch vermieden wird, daß ihnen eine gewisse Menge an sättigbaren Absorbern beigegeben werden, die einzelne einfallende Photonen und deren Reaktionsprodukte absorbieren und so eine zufällig mit geringen Strahlungsintensitäten initiierte Reaktion stoppen können.

**14.** Verfahren nach einem der Ansprüche 1 bis 13, dadurch gekennzeichnet, daß der quantenmechanische Prozeß der self induced transparency ausgenutzt wird, um eine unerwünschte Spontanzündung zu verhindern, aber nach der vorzugsweise durch kurzfristiges Bestrahlen mit hohen Photonendichten erfolgenden Zündung der Reaktion trotzdem die erwünschte hohe Durchlässigkeit der Substanz für Photonen zu erreichen.

**15.** Verfahren nach einem der Ansprüche 1 bis 14, dadurch gekennzeichnet, daß die Zündung der Reaktion durch Einfall einer intensiven gerichteten Photonenwelle so erfolgt, daß die Form der Reaktionsfront und die Richtung ihres Fortschreitens in der Art determiniert werden, daß sich die bei der Reaktion freigesetzten Photonen zu einer Photonenstoßwelle verstärken.

**16.** Verfahren nach einem der Ansprüche 1 bis 15, dadurch gekennzeichnet, daß sich die Reaktionspartner in einem Gefäß, insbesondere in Form eines länglichen Quaders oder Zylinders, befinden, das an den Seiten und am einen Ende, vorzugsweise mit Ausnahme einer Öffnung zum Eintritt der für die Zündung benötigten Photonen, verspiegelt ist (Figur 1), so daß durch die Geometrie eine Emissionsrichtung für die Photonen vorgegeben wird und die inkohärent und ohne Vorzugsrichtung emittierten Photonen zur Photonenstoßwelle beitragen können.

**17.** Verfahren nach einem der Ansprüche 1 bis 16, dadurch gekennzeichnet, daß die energiefreisetzende Reaktion ein Zerfall einer chemischen Verbindung nach dem Schema

$$AQ + h\gamma \rightarrow A + Q + k \cdot h\gamma \ (k > 1)$$

ist, wobei A und Q für Atome oder Atomgruppen stehen.

**18.** Verfahren nach einem der Ansprüche 1 bis 16, dadurch gekennzeichnet, daß die Photonenvervielfachung dadurch gewährleistet wird, daß sich die energiefreisetzende Reaktion aus dem photoneninduzierten Zerfall einer Substanz in zwei oder mehr Radikale und der photonenfreisetzenden Reaktion dieser Radikale mit einer oder mehreren weiteren Substanzen nach dem Schema

$$h\gamma + AQ \rightarrow A^* + Q^*$$
$$A^* + Q^* + XZ \rightarrow AX + QZ + 2\,h\gamma$$

zusammensetzt, wobei A, Q, X und Z für Atome oder Atomgruppen stehen.

**19.** Verfahren nach einem der Ansprüche 1 bis 16, dadurch gekennzeichnet, daß die energiefreisetzende Reaktion eine Umlagerung von Bindungen zwischen zwei Molekülen mit anschließender Weiterreaktion vom Typ

$$2\,AQ + 2\,h\gamma \rightarrow A_2 + 2\,Q^* + h\gamma$$
$$2\,Q^* + 2\,X \rightarrow 2\,QX + 2\,h\gamma$$

ist, wobei A, Q und X für Atome oder Atomgruppen stehen.

**20.** Verfahren nach einem der Ansprüche 1 bis 16, dadurch gekennzeichnet, daß die energiefreisetzende Reaktion ein Zerfall eines Excimers ist.

**21.** Verfahren nach einem der Ansprüche 1 bis 16, dadurch gekennzeichnet, daß die energiefreisetzende Reaktion einen elektronischen Übergang in den teilweise besetzten, inneren d-Orbitalen von Verbindungen der seltenen Erden beinhaltet.

**22.** Verfahren nach einem der Ansprüche 1 bis 16, dadurch gekennzeichnet, daß als energiereiche Stoffe Verbindungen vom Typ Iodazid verwendet werden.

**23.** Verfahren nach einem der Ansprüche 1 bis 16, dadurch gekennzeichnet, daß als energiereiche Stoffe Verbindungen vom Typ der hypergolen Treibstoffe verwendet werden.

**24.** Verfahren nach einem der Ansprüche 1 bis 16, dadurch gekennzeichnet, daß als energiereiche Stoffe Edelgasverbindungen, vorzugsweise Edelgashalogenide oder Edelgasoxide, verwendet werden.

**25.** Verfahren nach einem der Ansprüche 1 bis 16, dadurch gekennzeichnet, daß die energiefreisetzende Reaktion eine sterische Umlagerung von Orbitalen in in fester Form vorliegenden Molekülen ist.

**26.** Verfahren nach einem der Ansprüche 1 bis 16, dadurch gekennzeichnet, daß die energiefreisetzende Reaktion eine eingefrorene Neutralisationsreaktion ist, bei der die Reaktionspartner in einem nicht reaktionsfähigen Zustand homogen gemischt und bis zur Verwendung gelagert werden, wobei die NichtReaktionsfähigkeit durch starke Kühlung und/oder Ausrichtung der Spins, vorzugsweise in einem starken Magnetfeld, erreicht wird.

**27.** Verfahren nach einem der Ansprüche 1 bis 26, dadurch gekennzeichnet, daß die energiefreisetzende Reaktion eine Reaktion von Radikalen nach dem Schema

$$A^* + Q^* \rightarrow AQ + k \cdot h\gamma \ (k > 0)$$

beinhaltet.

## Claims

**1.** A process for the production of high energy flows by the release of energy from a preceding reaction front in energy-rich materials, characterized in that the initiation of the reaction, the progress of the reaction front and the extraction of energy from the reactive zone are obtained directly or indirectly by electromagnetic waves, namely by photons, which are not in thermal equilibrium with the reacting material and therefore, in the optimum case, can spread approximately at the speed of light, in that the unfolding reaction or the sum of the unfolding part reactions lead to a multiplication of photons, in that a velocity $v_E$ of the reaction front of over 10 km/s is achieved by suitable selection of the parameters average free path length $l$ of the photons in the energy-rich substance, average time $t_R$ between the absorption of a photon and the emission of the photons becoming free, and of the technical arrangement, which is achieved from the fact that $l$ and $t_R$ are matched to each other in such a way that according to the formula

$$v_E = l \cdot c \,/\, (l + t_R \cdot c)$$

(c = speed of light)
there is obtained as great as possible a $v_E$, and in that the energy extraction from the reactive zone is ensured by the fact that the reaction products are permeable to the released photons.

**2.** A process according to claim 1, characterized in that the release of energy occurs in the form of a chain reaction in which the elementary reaction is initiated by a photon, particularly in the wave range of about 200 to about 800 nm, but released more than one photon of the same wavelength.

**3.** A process according to either claim 1 or claim 2, characterized in that the end Products of the reaction are more permeable for the photons arising in the course of the reaction than the starting materials so that the photons arising from the overall volume behind the reaction front build up to a photon shock wave.

**4.** A process according to claims 1 and 3, characterized in that the released photons have another wave length than the inducing photons and in that the wavelength of these photons either is sufficient directly for the initiation of further elementary reactions or, particularly through quantum mechanical processes in "moderator molecules" are transformed to such wavelengths as can initiate the further elementary reactions.

**5.** A process according to claims 1, 2 and 4, characterized in that the energy-rich materials and the reaction products are permeable to the released photons and the energy-rich materials, however, are impermeable to the inducing photons, and that the "moderator molecules" decompose in the wavelength transformation, so that the call on energy and the spread of the chain reaction can be matched to each other optimally, and the photons arising from the volume behind the reaction front build up to a photon shock wave.

6.  A process according to claim 5, characterized in that the build up of the photon shock wave is supported by the fact that, preferably through additionally introduced substances which disintegrate on passing through the reaction front and which have a higher refractive index than their decomposition products, the refractive index of the medium before the reaction front is reduced relative to that behind the reaction front.

7.  A process according to either claim 5 or claim 6, characterized in that the build up of the photon shock wave is supported by the fast that, into the reactive mixture, substances are introduced which are able to take up the photons released in the course of the reaction, to hold them in intermediate storage preferably by transition into metastable activated states, and, after passing through the reaction front or a photon shock wave, to release them again.

8.  A process according to one of claims 1 to 7, characterized in that the self-focussing of the photons occurring at high photon densities as a result of the effects of the non-linear optics Bose-Einstein condensation is utilized for increasing further the energy flow achievable through the reaction.

9.  A process according to one of claims 1 to 8, characterized in that the energy-rich materials are arranged in the solid in such a manner that the reaction takes place by re-arrangement of the electronic molecular orbitals without appreciable change of place of the atom nuclei and therefore can progress, induced by photons and with the emission of photons, in a short time, preferably about $10^{-12}$ s.

10. A process according to one of claims 1 to 9, characterized in that the energy-releasing reactions are "frozen", i.e. the energy-rich substances, by powerful cooling and/or adjustment of the spin, particularly in a powerful magnetic field, are prevented from reacting prematurely.

11. A process according to one of claims 1 to 10, characterized in that a sudden modification of external electric and/or magnetic fields, particularly in connection with the utilization of the piezo-electric/magnetostrictive effect or of dipole moments, serves to bring about an energetically unstable state of the reaction partners, which can then be excited by photon absorption.

12. A process according to one of claims 1 to 11, characterized in that the danger of the spontaneous excitation of the energy-rich substances can be avoided in that, by a suitable selection of the reaction parameter, such as medium free path lengths, reaction time, photon multiplication factor, an initial state is set at which the individual photons are absorbed by the substance and only sizeable amounts of photons can set off the chain reaction.

13. A process according to one of claims 1 to 12, characterized in that the danger of spontaneous excitation of the energy-rich substances is avoided by adding to them a certain amount of saturable absorbers which absorb individual photons arising and their reaction products and thus can stop a reaction with low radiation intensities initiated by chance.

14. A process according to one of claims 1 to 13, characterized in that the quantum mechanical process of self-induced transparency is used to prevent an undesirable spontaneous excitation but, after the excitation of the reaction occurring preferably through short-period irradiation with high photon densities, to reach nevertheless the desired high permeability of the substance to photons.

15. A process according to one of claims 1 to 14, characterized in that the excitation of the reaction by the incidence of an intensive directed photon wave takes place in such a manner that the form of the reaction front and the direction of its progress are determined in such a way that the photons released during the reaction strengthen to a photon shock wave.

16. A process according to one of claims 1 to 15, characterized in that the reaction partners are situated in a vessel, particularly in the form of a longitudinal cuboid or cylinder, which on the sides and at one end, preferably with the exception of an opening forthe entry of the photons required for excitation , is mirror-coated (Fig. 1), so that an emission direction for the photons is pre-set by the geometry and the photons emitted incoherently and without preferential direction can contribute to the photon shock.

17. A process according to one of claims 1 to 16, characterized in that the energy-releasing reaction is a disintegration of a chemical compound according to the pattern:

$$AQ + h\gamma \rightarrow A + Q + K \cdot h\gamma \ (k>l)$$

wherein A and Q are atoms or atom groups.

18. A process according to one of claims 1 to 16, characterized in that the photon multiplication is ensured by the fact that the energy-releasing reaction is made up of the photon-induced disintegration of a substance into two or more radicals and of the photon-releasing reaction of these radicals with one or more further substances according to the pattern:

hy + AQ → A' + Q'
A' + Q' + XZ → AX + QZ + 2 hy

wherein A, Q, X and Z are atoms or atom groups.

19. A process according to one of claims 1 to 16, characterized in that the energy-releasing reaction is a rearrangement of bonds between two molecules with subsequent further reaction of the type

2 AQ + 2 hy → A$_2$ + 2 Q' + hy
2 Q' + 2 2 x → 2 QX + 2 hy

wherein A, Q and X are atoms or atom groups.

20. A process according to one of claims 1 to 16, characterized in that the energy-releasing reaction is a disintegration of an excimer.

21. A process according to one of claims 1 to 16, characterized in that the energy-releasing reaction contains an electronic transition into the partly occupied inner d-orbitals of compounds of rare earths.

22. A process according to one of claims 1 to 16, characterized in that compounds of the iodacide type are used as energy-rich substances.

23. A process according to one of claims 1 to 16, characterized in that as energy-rich substances use is made of compounds of hypergol type.

24. A process according to one of claims 1 to 16, characterized in that, as energy-rich substances, use is made of inert gas compounds, preferably inert gas halides or inert gas oxides.

25. A process according to one of claims 1 to 16, characterized in that the energy-releasing reaction is a steric rearrangement of orbitals in molecules present in solid form.

26. A process according to one of claims 1 to 16, characterized in that the energy-releasing reaction is a frozen neutralization reaction in which the reaction partners are homogeneously mixed in a non-reactive state and stored until use, the non-reactivity being achieved by poweful cooling and/or alignment of the spin, preferably in a powerful magnetic field.

27. A process according to one of claims 1 to 26, characterized in that the energy-releasing reaction contains a reaction of radicals according to the pattern

A' + Q → AQ + k · hy (k 0).

**Revendications**

1. Procédé pour l'engendrement de flux d'énergie élevés par libération d'énergie à partir d'un front de réaction avançant dans des matières riches en énergie, caractérisé en ce que l'initiation de la réaction, l'avancement du front de réaction et la décharge d'énergie hors de la zone réactive sont effectués, directement ou indirectement, par l'intermédiaire d'ondes électromagnétiques, à savoir par des photons, qui ne se trouvent pas en équilibre thermique avec la matière réagissant, et, par suite, dans le cas optimal, peuvent se propager avec approximativement la vitesse de la lumière, en ce que la réaction se déroulant, ou bien la somme de réactions partielles se déroulant, conduisent à une multiplication de photons, en ce qu'une vitesse $V_E$ du front de réaction de plus de 10 km/s est atteinte par choix approprié des paramètres de longueur de parcours libre moyen l des photons dans la substance riche en énergie, d'intervalle de temps $t_R$ moyen entre l'absorption d'un photon et l'émission des photons devenant libres et de l'agencement technique, ce qui est atteint grâce à ce que l et $t_R$ sont accordés ainsi l'un à l'autre, que conformément à la formule

$V_E = 1 · c/(1 + t_R · c)$

(c = vitesse de la lumière), résulte un $V_E$ le plus grand possible, et en ce que la décharge d'énergie hors de la zone réactive est garantie grâce à ce que les produits de réaction pour les photons libérés sont perméables.

2. Procédé selon la revendication 1, caractérisé en ce que la libération d'énergie a lieu sous forme d'une réaction en chaîne, lors de laquelle la réaction élémentaire est initiée par un photon, en particulier dans la plage de longueur d'onde d'environ 200 jusqu'à environ 800 nm, mais libère plus d'un photon de la même longueur d'onde.

3. Procédé selon la revendication 1 ou la revendication 2, caractérisé en ce que les produits finaux de la réaction sont plus perméables pour les photons sortant lors de la réaction que les matières de départ, de sorte que les photons sortant hors du volume total derrière le front de réaction s'établissent en une onde de choc de photons.

4. Procédé selon la revendication 1 et la revendication 3, caractérisé en ce que les photons libérés ont une autre longueur d'onde que les photons induisants, et en ce que la longueur d'onde de ces photons, soit suffit directement pour l'initiation d'autres réactions élémentaires, soit est transformée, en particulier par des processus quantummécaniques dans des "molécules de modérateur", en de telles longueurs d'ondes, qui peuvent initier d'autres réactions élémentaires.

5. Procédé selon les revendications 1, 2 et 4, caractérisé en ce que les matières riches en énergie et les produits de réaction sont perméables pour les photons libérés et les matières riches en énergie sont par contre imperméables pour les photons induisants, et en ce que les "molécules de modérateur" se décomposent lors de la transformation de longueur d'onde, de sorte que l'appel d'énergie et la propagation de la réaction en chaîne peuvent être accordés de façon optimale l'un à l'autre et les photons sortant hors du volume derrière le front de réaction s'établissent en une onde de choc de photons.

6. Procédé selon la revendication 5, caractérisé en ce que l'établissement de l'onde de choc de photons est maintenue grâce à ce que, de façon préférée par des matières introduites en supplément, qui lors de passage du front de réaction se désintègrent et qui ont un indice de réfraction plus élevé que leurs produits de désintégration, l'indice de réfraction du milieu devant le front de réaction est rehaussé par rapport à celui derrière le front de réaction.

7. Procédé selon la revendication 5 ou la revendication 6, caractérisé en ce que l'établissement de l'onde de choc de photons est soutenu grâce à ce que des matières sont introduites dans le mélange réactif, qui sont dans la situation, d'accueillir les photons devenant libres lors de la réaction, de façon préférée de les emmagasiner temporairement par transition dans des états excités métastables, et, après passage du front de réaction ou bien d'une onde de choc de photons, de les émettre à nouveau.

8. Procédé selon une des revendications 1 à 7, caractérisé en ce que l'autofocalisation des photons survenant lors de densités de photons élevées, en raison des effets de l'optique non linéaire, condensation de Bose-Einstein, est exploitée afin d'accroître encore le flux d'énergie susceptible d'être obtenu par la réaction.

9. Procédé selon une des revendication 1 à 8, caractérisé en ce que les matières riches en énergie sont agencées dans le corps solide de telle sorte, que la réaction a lieu par nouvel agencement des orbitales moléculaires électroniques sans changement local notable des noyaux d'atomes et à cet effet est induite par des photons, et peut se dérouler avec émission de photons dans un temps court, de façon préférée a peu près $10^{-12}$ s.

10. Procédé selon une des revendications 1 à 9, caractérisé en ce que les réactions libérant de l'énergie sont "congelées", c'est-à-dire que les substances riches en énergie sont empêchées là de réagir prématurément par fort refroidissement et/ou orientation du spin, en particulier dans un champ magnétique fort.

11. Procédé selon une des revendications 1 à 10, caractérisé en ce qu'un changement soudain de champ extérieurs électriques et/ou magnétiques, en particulier en relation avec l'exploitation de l'effet piezoélectrique/magnétostrictif ou de moments dipolaires, sert en outre à occasionner un état énergétiquement instable du partenaire de réaction, qui ensuite peut être allumé par absorption de photons.

12. Procédé selon une des revendications 1 à 11, caractérisé en ce que le danger d'allumage spontané des matières riches en énergie est évité grâce à ce que, par choix approprié des paramètres de réaction, tels que longueurs de parcours libre moyennes, temps de réaction, facteur de multiplication de photons, un état de sortie est ajusté, lors duquel des photons individuels de la matière sont absorbés et, simplement, de plus grande quantité de photons peuvent déclencher la réaction en chaîne.

13. Procédé selon une des revendications 1 à 12, caractérisé en ce que lia danger d'un allumage spontané des matières riches en énergie est évité, grâce à ce que des absorbeurs susceptibles d'être saturés leur sont adjoints en une certaine quantité, qui absorbent des photons incidents et leurs produits de réaction, et ainsi peuvent stopper une réaction initiée fortuitement avec des intensités de rayonnement faibles.

14. Procédé selon une des revendications 1 à 13, caractérisé en ce que le processus quantummécanique de la transparence auto-induite est exploitée, afin d'empêcher un allumage spontané non souhaité, mais de parvenir à l'amorçage de la réaction, ayant lieu de façon préférée par des irradiations pendant de courts délais, avec des densités de photons élevées, malgré la perméabilité élevée souhaitée de la substance pour des photons.

15. Procédé selon une des revendications 1 à 14, caractérisé en ce que l'amorçage de la réaction par incidence d'une onde de photons dirigée intensive a lieu ainsi, que la forme de front de réaction et la direction de sa progression sont déterminées de telle sorte, que les photons libérés lors de la réaction se renforcent en une onde de choc de photons.

16. Procédé selon une des revendications 1 à 15, caractérisé en ce que les partenaires de réaction se trouvent dans un récipient, en particulier en forme d'un parallélépipède ou d'un cylindre allongés, qui, aux côtés et à une extrémité, de façon préférée à l'exception d'une ouverture pour l'entrée des photons nécessaires pour l'amorçage, est pourvu d'une couche réfléchissante (figure 1), de sorte que grâce à la géométrie, une direction d'émission pour les photons est prédéterminée, et les photons émis incohérents et sans direction préférentielle peuvent contribuer à l'onde de choc de photons.

17. Procédé selon une des revendications 1 à 16, caractérisé en ce que la réaction libérant de l'énergie est une décomposition d'un composé chimique selon le schéma

$$AQ + h\gamma \rightarrow A + Q + k \cdot h\gamma \ (k > 1)$$

A et Q étant pour des atomes ou des groupes d'atomes.

18. Procédé selon une des revendications 1 à 16, caractérisé en ce que la multiplication de photons est garantie grâce à ce que la réaction libérant de l'énergie, à partir de la décomposition induite par des photons d'une substance en deux radicaux ou plus et de la réaction libérant des photons de ces radicaux, se combine avec une ou plusieurs autres substances selon le schéma

$$h\gamma + AQ \rightarrow A^* + Q^*$$
$$A^* + Q^* + XZ \rightarrow AX + QZ + 2 h\gamma$$

A, Q, X et Z étant pour des atomes ou des groupes d'atomes.

19. Procédé selon une des revendications 1 à 16, caractérisé en ce que la réaction libérant de l'énergie est une transposition de liaisons entre deux molécules, avec réaction supplémentaire consécutives du type

$$2 AQ + 2 h\gamma \rightarrow A_2 + 2 Q^* + h\gamma$$
$$2 Q^* + 2 X \rightarrow 2 QX + 2 h\gamma$$

A, Q et X étant pour des atomes ou des groupes d'atomes.

20. Procédé selon une des revendications 1 à 16, caractérisé en ce que la réaction libérant de l'énergie est une décomposition d'un excimeur.

21. Procédé selon une des revendications 1 à 16, caractérisé en ce que la réaction libérant de l'énergie comporte une transition électronique dans les orbitales d intérieures, partiellement occupées, de composés des terres rares.

22. Procédé selon une des revendications 1 à 16, caractérisé en ce que comme matières riches en énergie, sont employées des composés du type azide d'iode.

23. Procédé selon une des revendications 1 à 16, caractérisé en ce que comme matières riches en énergie, sont employés des composés du type des combustibles hypergoliques.

24. Procédé selon une des revendications 1 à 16, caractérisé en ce que comme matières riches en énergie, sont employés des composés de gaz rares, de façon préférée des halogénures de gaz rares ou des oxydes de gaz rares.

25. Procédé selon une des revendications 1 à 16, caractérisé en ce que la réaction libérant de l'énergie est une transposition stérique d'orbitals en des molécules présentes sous forme solide.

26. Procédé selon une des revendications 1 à 16, caractérisé en ce que la réaction libérant de l'énergie est une réaction de neutralisation congelée, lors de laquelle, les partenaires de réaction sont mélangés de façon homogène en un état non apte à la réaction et sont emmagasinés pour l'emploi, l'aptitude à la non-réaction étant obtenue par refroidissement poussé et/ou orientation du spin, de façon préférée dans un champ magnétique fort.

27. Procédé selon une des revendications 1 à 26, caractérisé en ce que la réaction libérant de l'énergie comporte une réaction de radicaux selon le schéma

$$A^* + Q^* \rightarrow AQ + k \cdot h\gamma \ (k > 0).$$

Fig.1